# EUROPÄISCHE PATENTSCHRIFT

(11) **EP 3 654 570 B1**
(45) Veröffentlichungstag und Bekanntmachung des Hinweises auf die Patenterteilung: **13.08.2025**
(21) Anmeldenummer: 19199601.6
(22) Anmeldetag: 25.09.2019
(51) Int. Cl.: H04L 5/00

(54) **KOMMUNIKATIONSNETZWERK UND VERFAHREN ZUM BETREIBEN EINES KOMMUNIKATIONSNETZWERKS**
COMMUNICATION NETWORK AND METHOD FOR OPERATING A COMMUNICATION NETWORK
RÉSEAU DE COMMUNICATION ET PROCÉDÉ DE FONCTIONNEMENT D'UN RÉSEAU DE COMMUNICATION

(30) Priorität: 15.11.2018 DE 102018219500
(43) Veröffentlichungstag der Anmeldung: 20.05.2020
(73) Patentinhaber: Robert Bosch GmbH, 70442 Stuttgart (DE)
(72) Erfinder: Duengen, Monique, 30451 Hannover (DE); Von Hoyningen-Huene, Johannes, 71063 Sindelfingen (DE); Hansen, Thomas, 31139 Hildesheim (DE); Mueller, Andreas, 71336 Waiblingen (DE); Dietrich, Steven, 97816 Lohr Am Main (DE)

(56) Entgegenhaltungen:
- EP-A1- 1 730 858
- US-A1- 2011 116 432

## Beschreibung

### Stand der Technik

Bei bekannten Kommunikationsnetzwerken müssen in beide Richtungen Trainingssequenzen gesendet und ausgewertet werden, um jeweils die Kanaleigenschaften zu bestimmen. Dies führt in beiden Richtungen zur Reduktion der effektiven Nutzdatenrate, da während der Übertragung dieser Trainingssequenzen keine Nutzdaten gesendet werden können. Des Weiteren ist es möglich, dass ein Frequenzband stärker gestört ist als das andere (z. B. stärker gedämpft). Bei einer statischen Zuordnung der Frequenzbänder zu den Übertragungsrichtungen (DL und UL) wäre eine der beiden Übertragungsrichtungen damit im Mittel stärker gestört. Da in vielen Fällen beide Übertragungsrichtungen gleich wichtig für das Gesamtsystem sind, wird die Gesamtleistung allein durch den schwächeren Kanal bestimmt.

EP 1 730 858 B1 offenbart ein Verfahren, eine Vorrichtung und ein System für Duplex-Kommunikation. Uplink- und Downlink-Frequenzen werden in einer orthogonalen Weise zugewiesen, so dass zu einem Zeitpunkt eine bestimmte Trägerfrequenz für die Uplink- (Downlink-) Übertragung und zu einem anderen Zeitpunkt für die Downlink- (Uplink-) Übertragung verwendet wird. Dementsprechend wird zu diesem einen Zeitpunkt eine zweite Trägerfrequenz für die Übertragung in der Abwärtsstrecke (Aufwärtsstrecke) und zu diesem anderen Zeitpunkt wahlweise für die Übertragung in der Aufwärtsstrecke (Abwärtsstrecke) verwendet.

US 2011/0116432 A1 offenbart ein Verfahren, das die Verwendung einer ersten Frequenz für die Kommunikation in einer ersten Richtung mit einem Infrastrukturknoten und einer zweiten Frequenz für die Kommunikation in einer zweiten Richtung mit dem Infrastrukturknoten während einer normalen Betriebsphase in einem drahtlosen Netzwerk umfasst. Das Verfahren kann ferner die Umkehrung der Frequenzen umfassen, die für die Kommunikation in der ersten und zweiten Richtung mit dem Infrastrukturknoten während einer Verbindungsumkehrphase verwendet werden.

### Offenbarung der Erfindung

Das der Erfindung zu Grunde liegende Problem wird durch ein Kommunikationsnetzwerk gemäß Anspruch 1 gelöst.

Ein erster Aspekt dieser Beschreibung betrifft ein erstes Kommunikationsmodul für ein Kommunikationsnetzwerk, wobei das erste Kommunikationsmodul mindestens einen Prozessor und mindestens einen Speicher umfasst, wobei der Prozessor und der Speicher so konfiguriert sind, dass das erste Kommunikationsmodul eine erste bekannte Sequenz und erste Daten auf einem ersten Duplexkanal innerhalb eines ersten Zeitrahmens sendet, zweite Daten auf einem zweiten Duplexkanal innerhalb des ersten Zeitrahmens empfängt, wobei der Empfang der zweiten Daten gleichzeitig mit dem Senden der ersten a-priori bekannten Sequenz und/oder der ersten Daten durchgeführt wird, dritte Daten auf dem ersten Duplexkanal innerhalb eines zweiten Zeitrahmens, welcher auf den ersten Zeitrahmen folgt, empfängt, und eine zweite a-priori bekannte Sequenz und vierte Daten auf dem zweiten Duplexkanal innerhalb des zweiten Zeitrahmens sendet, wobei der Versand der zweiten a-priori bekannten Sequenz und/oder der vierten Daten gleichzeitig mit dem Empfang der dritten Daten durchgeführt wird.

Vorteilhaft sind hierdurch Kanalschätzwerte nur auf der Seite des anderen Kommunikationspartners beispielsweise eines zweiten Kommunikationsmoduls erforderlich. Die a-priori bekannte Sequenz/Sequenzen müssen nur noch in einer Übertragungsrichtung (z. B. im Downlink) übertragen werden, da in der entsprechenden anderen Übertragungsrichtung der Kanal nicht geschätzt werden muss. Vielmehr kann vorteilhaft die Reziprozität eines Funkkanals ausgenutzt werden (d. h., dass sich der Kanal in beide Übertragungsrichtungen genau gleich verhält). Beispielsweise können die für eine empfangsseitige Entzerrung ermittelten Kanalschätzwerte anschließend auch für eine senderseitige Vorverzerrung eines Signals auf denselben Übertragungsressourcen genutzt werden. Dadurch ergeben sich eine ganze Reihe von Vorteilen: Eine Reduktion des Overheads aufgrund der Übertragung bzw. Einbettung von bekannten Trainingssequenzen in den Datenstrom und dadurch Erhöhung der Netto-/Nutzdatenrate, eine Erhöhung der Energieeffizienz von Geräten durch eine Reduktion der Anzahl der benötigten Kanalschätzungen, und eine Reduktion des Signalisierungsaufwandes, der ohne das vorgeschlagene Verfahren nötig wäre, um den Sender über die empfangsseitig ermittelten Kanalschätzwerte in Kenntnis zu setzen. Durch den stetigen Wechsel der Duplexkanäle wird in beiden Übertragungsrichtungen im zeitlichen Mittel die gleiche Übertragungsgüte erreicht. Im Fall einer starken Störung in einem Frequenzband fällt keine der beiden Übertragungsrichtungen komplett aus. Die Gesamtleistung ist somit nicht mehr durch die stärker gestörte Übertragungsrichtung, sondern durch die mittlere Leistungsfähigkeit auf beiden Übertragungsrichtungen gegeben.

Durch eine Mehrfachnutzung der a-priori bekannten Sequenz in beide Kommunikationsrichtungen kann auf eine gesonderte Übertragung einer Trainingssequenz zur Kanalschätzung in eine Richtung verzichtet werden. Im Falle eines Funkkommunikationsnetzwerks kann u. U. zwar nicht vollständig auf eine Uplink-Präambel verzichtet werden, um z. B. Timing Advance Werte bestimmen zu können. Durch das Weglassen einer Trainingssequenz kann die vorgeschlagene a-priori bekannte Sequenz aber kürzer ausfallen, was zu einer Erhöhung der Nutzdatenrate in eine Kommunikationsrichtung führt.

In Fällen, bei denen einer der beiden beteiligten Duplexkanäle deutlich stärker gestört ist als der jeweils andere Übertragungskanal, sorgen die vorgeschlagenen Maßnahmen dafür, dass mit höherer Wahrscheinlichkeit keine der beiden Übertragungsrichtungen vollständig ausfällt. Eine höhere Verfügbarkeit der Übertragung ist in jede Richtung zumindest in jedem zweiten Zyklus gegeben. Besonders Anwendungen, bei denen eine hohe Verfügbarkeit gefordert ist, profitieren hiervon. Damit wird die der Robustheit der Kommunikation durch Diversität der verwendeten Duplexkanäle und deren Nutzung erhöht.

Ein vorteilhaftes Beispiel zeichnet sich dadurch aus, dass das erste Kommunikationsmodul die empfangenen zweiten Daten ohne eine vorab durchgeführte Schätzung des zweiten Duplexkanals bereitstellt, und die empfangenen dritten Daten ohne eine vorab durchgeführte Schätzung des ersten Duplexkanals bereitstellt. Vorteilhaft entfällt eine Schätzung der Duplexkanäle auf der Seite des ersten Kommunikationsmoduls, was durch eine Vorverzerrung aufseiten des Kommunikationspartners kompensiert wird.

Ein vorteilhaftes Beispiel zeichnet sich dadurch aus, dass das erste Kommunikationsmodul die ersten Daten ohne vorab durchgeführte Schätzung des ersten Duplexkanals versendet, und die vierten Daten ohne eine vorab durchgeführte Schätzung des zweiten Duplexkanals versendet. Vorteilhaft entfällt die Schätzung der Duplexkanäle auf der Seite des ersten Kommunikationsmoduls und eine entsprechende Vorverzerrung auch beim Versenden, was durch eine Schätzung und Korrektur aufseiten des Kommunikationspartners kompensiert wird.

Ein vorteilhaftes Beispiel zeichnet sich dadurch aus, dass der erste und der zweite Duplexkanal physikalische Funkkanäle sind, wobei die a-priori bekannte Sequenz, die ersten Daten und die vierten Daten Downlink-Daten sind, und wobei die zweiten Daten und die dritten Daten Uplink-Daten sind. Da Endgeräte eines Funkkommunikationsnetzwerks sich an unterschiedlichen Orten befinden, hat jeder Duplexkanal zwischen dem jeweiligen Endgerät und einer infrastrukturseitigen Netzwerkeinheit wie beispielsweise einer Basisstation individuelle Kanaleigenschaften. Diese Kanaleigenschaften umfassen beispielsweise eine individuelle Kanaldämpfung und Phasenverschiebung.
Wird beispielsweise gefordert, dass alle Uplink-Signale die von unterschiedlichen Endgeräten ausgesendet werden, die infrastrukturseitige Netzwerkeinheit synchron und trotz unterschiedlicher Kanaleigenschaften ohne Kanalverzerrungen erreichen, so folgt, dass jegliche Kompensation der Übertragungskanäle aufseiten der Endgeräte zu erfolgen hat. Das heißt, dass in Downlink-Richtung eine empfängerseitige Entzerrung und in Uplink-Richtung eine senderseitige Vorverzerrung erfolgt. Folglich müssen hierfür auch nur Endgeräte-seitig entsprechende Kanalschätzwerte vorliegen bzw. ermittelt werden.

Ein vorteilhaftes Beispiel zeichnet sich dadurch aus, dass der erste und der zweite Duplexkanal physikalische Funkkanäle sind, wobei die a-priori bekannte Sequenz, die ersten Daten und die vierten Daten Uplink-Daten sind, und wobei die zweiten Daten und die dritten Daten Downlink-Daten sind.

Ein weiterer Aspekt dieser Beschreibung betrifft ein Verfahren zum Betreiben eines ersten Kommunikationsmoduls, wobei das Verfahren umfasst: Senden einer ersten a-priori bekannte Sequenz und erster Daten auf einem ersten Duplexkanal innerhalb eines ersten Zeitrahmens, Empfangen zweiter Daten auf einem zweiten Duplexkanal innerhalb des ersten Zeitrahmens, wobei der Empfang der zweiten Daten gleichzeitig mit dem Senden der ersten a-priori bekannten Sequenz und/oder der ersten Daten durchgeführt wird, Empfangen dritter Daten auf dem ersten Duplexkanal innerhalb eines zweiten Zeitrahmens, welcher auf den ersten Zeitrahmen folgt, und Senden einer zweiten a-priori bekannten Sequenz und vierter Daten auf dem zweiten Duplexkanal innerhalb des zweiten Zeitrahmens, wobei der Versand der zweiten a-priori bekannten Sequenz und/oder der vierten Daten gleichzeitig mit dem Empfangen der dritten Daten durchgeführt wird.

Ein weiterer Aspekt dieser Beschreibung betrifft ein zweites Kommunikationsmodul für ein Kommunikationsnetzwerk, wobei das zweite Kommunikationsmodul mindestens einen Prozessor und mindestens einen Speicher umfasst, wobei der Prozessor und der Speicher so konfiguriert sind, dass das zweite Kommunikationsmodul eine erste a-priori bekannte Sequenz und erste Daten auf einem ersten Duplexkanal innerhalb eines ersten Zeitrahmens empfängt, zweite Daten auf einem zweiten Duplexkanal innerhalb des ersten Zeitrahmens sendet, wobei der Versand der zweiten Daten gleichzeitig mit dem Empfang der ersten a-priori bekannten Sequenz und/oder der ersten Daten durchgeführt wird, dritte Daten auf dem ersten Duplexkanal innerhalb eines zweiten Zeitrahmens, welcher auf den ersten Zeitrahmen folgt, sendet, und eine zweite a-priori bekannte Sequenz und vierte Daten auf dem zweiten Duplexkanal innerhalb des zweiten Zeitrahmens empfängt, wobei der Empfang der zweiten a-priori bekannten Sequenz und/oder der vierten Daten gleichzeitig mit dem Senden der dritten Daten durchgeführt wird.

Es wird ein reduzierter Overhead hinsichtlich der a-priori bekannten Sequenz erreicht. Die vom ersten Kommunikationsmodul versendete a-priori bekannte Sequenz kann vorteilhaft aufseiten des zweiten Kommunikationsmoduls dazu genutzt werden, um eine Entzerrung der empfangenen Daten im aktuellen Zeitfenster und eine Vorverzerrung der UL-Daten im folgenden Zeitfenster zu erreichen.

Ein vorteilhaftes Beispiel zeichnet sich dadurch aus, dass das zweite Kommunikationsmodul eine erste Schätzung des ersten Duplexkanals in Abhängigkeit von der empfangenen ersten a-priori bekannten Sequenz ermittelt, eine Schätzung des zweiten Duplexkanals in Abhängigkeit von der empfangenen zweiten a-priori bekannten Sequenz ermittelt, die zu sendenden zweiten Daten auf Basis der zweiten Schätzung des zweiten Duplexkanals vorverzerrt, und die zu sendenden dritten Daten auf Basis der ersten Schätzung des ersten Duplexkanals vorverzerrt.

Ein vorteilhaftes Beispiel zeichnet sich dadurch aus, dass das zweite Kommunikationsmodul die erste Schätzung des ersten Duplexkanals in Abhängigkeit von der empfangenen ersten a-priori bekannten Sequenz ermittelt, die Schätzung des zweiten Duplexkanals in Abhängigkeit von der empfangenen zweiten a-priori bekannten Sequenz ermittelt, die empfangenen ersten Daten auf Basis der ersten Schätzung des ersten Duplexkanals entzerrt, und die empfangenen vierten Daten auf Basis der zweiten Schätzung des zweiten Duplexkanals entzerrt.

Vorteilhaft kann eine Schätzung der Duplexkanäle auf der Seite des ersten Kommunikationsmoduls entfallen, was durch die Vorverzerrung aufseiten des zweiten Kommunikationsmoduls kompensiert wird.

Ein vorteilhaftes Beispiel zeichnet sich dadurch aus, dass der erste und der zweite Duplexkanal physikalische Funkkanäle sind, wobei die a-priori bekannte Sequenz, die ersten Daten und die vierten Daten Downlink-Daten sind, und wobei die zweiten Daten und die dritten Daten Uplink-Daten sind.

Da Endgeräte eines Funkkommunikationsnetzwerks sich an unterschiedlichen Orten befinden, hat jeder Duplexkanal zwischen dem jeweiligen Endgerät und einer infrastrukturseitigen Netzwerkeinheit wie beispielsweise einer Basisstation individuelle Kanaleigenschaften. Diese Kanaleigenschaften umfassen beispielsweise eine individuelle Kanaldämpfung und Phasenverschiebung.

Wird beispielsweise gefordert, dass alle Uplink-Signale die von unterschiedlichen Endgeräten ausgesendet werden, die infrastrukturseitige Netzwerkeinheit synchron und trotz unterschiedlicher Kanaleigenschaften ohne Kanalverzerrungen erreichen, so folgt, dass jegliche Kompensation der Übertragungskanäle aufseiten der Endgeräte zu erfolgen hat. Das heißt, dass in Downlink-Richtung eine empfängerseitige Entzerrung und in Uplink-Richtung eine sendeseitige Vorverzerrung erfolgt. Folglich müssen auch nur Endgeräte-seitig dafür entsprechende Kanalschätzwerte vorliegen bzw. ermittelt werden.

Ein vorteilhaftes Beispiel zeichnet sich dadurch aus, dass der erste und der zweite Duplexkanal physikalische Funkkanäle sind, wobei die a-priori bekannte Sequenz, die ersten Daten und die vierten Daten Uplink-Daten sind, und wobei die zweiten Daten und die dritten Daten Downlink-Daten sind.

Weitere Aspekte dieser Beschreibung betreffen ein Endgerät eines Funkkommunikationsnetzwerks, wobei das Endgerät das erste oder zweite Kommunikationsmodul gemäß einem der vorangehenden Aspekte umfasst.

Weitere Aspekte dieser Beschreibung betreffen eine infrastrukturseitige Netzwerkeinheit eines Funkkommunikationsnetzwerks, wobei die Netzwerkeinheit das erste oder zweite Kommunikationsmodul gemäß einem der vorangehenden Aspekte umfasst.

Ein weiterer Aspekt dieser Beschreibung betrifft ein Verfahren zum Betreiben eines zweiten Kommunikationsmoduls, wobei das Verfahren umfasst: Empfangen einer ersten a-priori bekannten Sequenz und erster Daten auf einem ersten Duplexkanal innerhalb eines ersten Zeitrahmens, Senden zweiter Daten auf einem zweiten Duplexkanal innerhalb des ersten Zeitrahmens, wobei der Versand der zweiten Daten gleichzeitig mit dem Empfang der ersten a-priori bekannten Sequenz und/oder der ersten Daten durchgeführt wird, Senden dritter Daten auf dem ersten Duplexkanal innerhalb eines zweiten Zeitrahmens, welcher auf den ersten Zeitrahmen folgt, und Empfangen einer zweiten a-priori bekannten Sequenz und vierter Daten auf dem zweiten Duplexkanal innerhalb des zweiten Zeitrahmens, wobei der Empfang der zweiten a-priori bekannten Sequenz und/oder der vierten Daten gleichzeitig mit dem Senden der dritten Daten durchgeführt wird.

In der Zeichnung zeigen:
- Figur 1: ein schematisch dargestelltes Funkkommunikationsnetzwerk;
- Figur 2: ein schematisch dargestelltes Sequenzdiagramm; und
- Figuren 3 und 4: jeweils ein schematisches Wechselschema für Duplexkanäle.

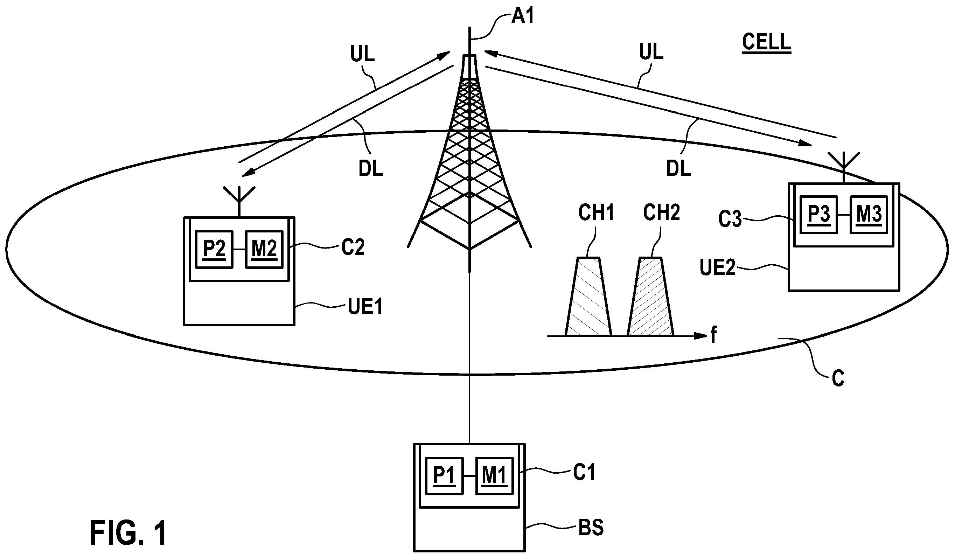

Figur 1 zeigt beispielhaft ein zell-basiertes bidirektionales Funkkommunikationsnetzwerk CELL. Das erste Drahtloskommunikationsnetzwerk CELL umfasst eine netzwerkinfrastrukturseitige Netzwerkeinheit BS, ein erstes Endgerät UE1 und eine zweites Endgerät UE2. Die netzwerkinfrastrukturseitige Netzwerkeinheit BS umfasst ein Kommunikationsmodul C1, welches einen Prozessor P1 und ein Speicherelement M2 umfasst. Die netzwerkinfrastrukturseitige Netzwerkeinheit BS ist auch als Basisstation oder eNodeB bezeichenbar. Die netzwerkinfrastrukturseitige Netzwerkeinheit BS ist mit einer stationären Antenne A1 verbunden, um Daten in einer Downlink-Richtung DL zu senden und Daten in einer Uplink-Richtung UL zu empfangen. Die Antenne A1 umfasst beispielsweise eine Anzahl von Antennen und ist als Remote Radio Head, RRH, ausgeführt. Die netzwerkinfrastrukturseitige Netzwerkeinheit BS und die Antenne A stellen eine Zelle C bereit, innerhalb derer die Endgeräte UE1 und UE2 mit der Netzwerkeinheit BS kommunizieren. Selbstverständlich kann die netzwerkinfrastrukturseitige Netzwerkeinheit BS im Rahmen einer Virtualisierung auch verteilt aufgebaut sein und aus vereinzelten Netzwerkeinheiten bestehen.

Das Endgerät UE1, UE2 umfasst jeweils ein Kommunikationsmodul C2, C3, welches einen Prozessor P2, P3 und ein Speicherelement M2, M3 umfasst. Die beiden Endgeräte UE1, UE2 befinden sich innerhalb der Zelle C, empfangen Daten in der Downlink-Richtung DL und versenden Daten in der Uplink-Richtung UL. Die Kommunikationsmodule C1 und C2 bzw. C1 und C3 sind so aufeinander abgestimmt, dass über einen ersten Duplexkanal CH1 und einen zweiten Duplexkanal CH2 kommuniziert wird. Die beiden Duplexkanäle CH1 und CH2 unterscheiden sich beispielsweise durch den verwendeten Frequenzbereich. Sowohl in Downlink-Richtung DL als auch in Uplink-Richtung UL werden beide Duplexkanäle verwendet. Des Weiteren können weitere Duplexkanäle vorgesehen sein, welche von den Kommunikationsmodulen C1 bis C3 verwendet werden. Die Duplexkanäle CH1 und CH2 nutzen beispielsweise unterschiedliche Frequenzbänder bei FDD (Frequency Division Duplex).

Die nachfolgend beschriebenen Verfahren und Maßnahmen sind jedoch nicht allein auf die Verwendung in Funkkommunikationsnetzwerken beschränkt. Selbstverständlich können auch andere Kommunikationsnetzwerke von den beschriebenen Maßnahmen profitieren. Beispielsweise unterscheiden sich auch bei anderen Kommunikationsnetzwerken physikalische Übertragungskanäle (z. B. Frequenz oder Raum) voneinander und können für beide Übertragungsrichtungen verwenden werden. Die hier beschriebenen Maßnahmen können bei einer Vielzahl von bidirektionalen Kommunikationssystemen eingesetzt werden, bei denen eine Kanalschätzung notwendig ist und sich die sowohl die Kanalparameter und/oder die Kanalqualität laufend ändern. Dies ist gerade bei einer Vielzahl von Anwendungen von Funkkommunikation wie beispielhaft in Figur 1 dargestellt der Fall. Darüber hinaus kann das Verfahren bei einer Vielzahl von weiteren bidirektionalen Übertragungsverfahren eingesetzt werden, die Full-Duplex, also die gleichzeitige Übertragung in beide Richtungen, einsetzen. Neben FDD in drahtlosen wie auch drahtgebundenen Kommunikationsnetzwerken betrifft dies auch Systeme, die die Übertragungsströme über individuelle räumliche Ströme führen, z. B. über individuelle elektrische oder optische Leitungen für jede Übertragungsrichtung. Sofern die Sende- und Empfangsstrukturen den stetigen Wechsel des Duplexkanals zulassen, lassen sich auch hier die Vorteile durch reduzierte Präambel und erhöhte Diversität ausnutzen.

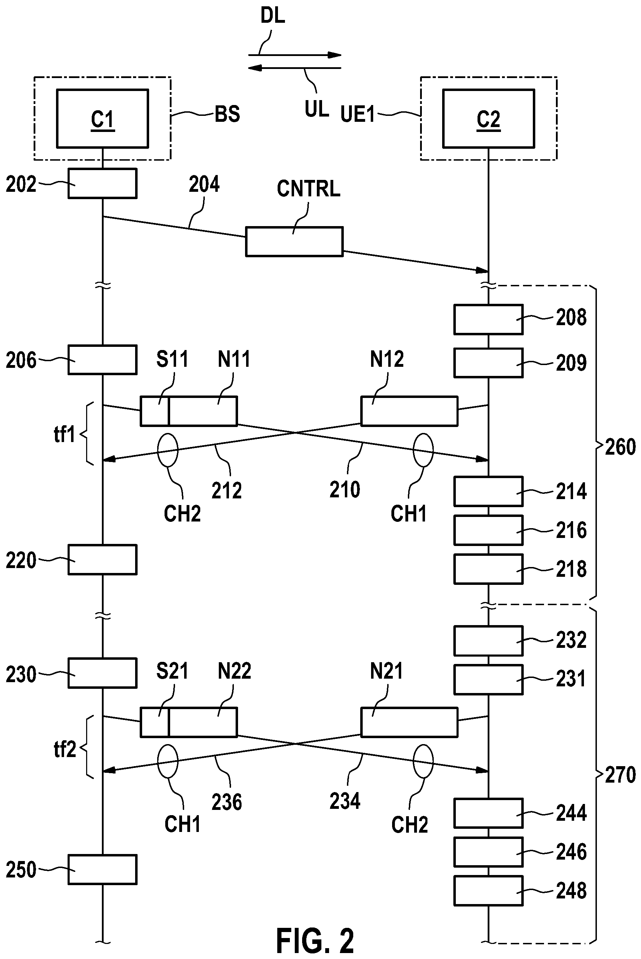

Figur 2 zeigt ein schematisches Sequenzdiagramm zum Betreiben des Kommunikationsnetzwerks CELL. Die netzwerkinfrastrukturseitige Netzwerkeinheit BS ermittelt in einem Schritt 202 eine Kontrollnachricht CNTRL, welche in einem Schritt 204 an das Endgerät UE 1 übermittelt wird. Die Kontrollnachricht CNTRL umfasst Anweisungen, welche beispielsweise die nachfolgend erläuterten Wechselschemata der Duplexkanäle betrifft. In einem Schritt 206 werden Daten N11 zu einem Versand an das Endgerät UE1 ermittelt. In einem Schritt 208 werden Daten N12 zu einem Versand an die Netzwerkeinheit BS ermittelt.

Die Daten N12 werden in einem Schritt 209 in Abhängigkeit von einer zuvor durchgeführten Kanalschätzung für den zweiten Duplexkanal CH2 vorverzerrt, sodass die Netzwerkeinheit BS im besten Fall keine Kanalschätzung und davon abhängige Kanalentzerrung durchführen muss. Im ersten Zyklus bei der Inbetriebnahme der Funkverbindung entfällt dieser Schritt 209, da das Endgerät UE1 bisher keine Kanalschätzung zum Kanal CH2 ermittelt hat. In einem Schritt 210 werden eine a-priori bekannte Sequenz S11 und die Daten N11 über den ersten Duplexkanal CH1 an das Endgerät UE1 übermittelt. In einem Schritt 212 werden die Daten N12 über den zweiten Duplexkanal CH2 von dem Endgerät UE1 an die Netzwerkeinheit BS übermittelt. Die Schritte 210 und 212 überlappen sich zeitlich innerhalb eines Zeitfensters tf1.

In Abhängigkeit von der empfangenen vorbekannten Sequenz S11 ermittelt das Endgerät UE1 in einem Schritt 214 eine Schätzung des Kanals CH1. In Abhängigkeit von der ermittelten Schätzung des Kanals CH1 werden in einem Schritt 216 werden die empfangenen Daten N11 entzerrt und einer Anwendung des Endgeräts UE1 bereitgestellt.

In einem Schritt 218 synchronisiert sich das Endgerät UE1 auf die empfangene vorbekannte Sequenz S11. So kann beispielsweise auf Basis einer vorbekannten Position der vorbekannten Sequenz S11 auf den Beginn des Zeitfensters tf1 und den Beginn des darauffolgenden Zeitfensters geschlossen werden.

In einem Schritt 220 werden die Daten N12 ohne eine vorab durchgeführte Kanalschätzung oder eine vorab durchgeführte Entzerrung der Daten N12 einer Anwendung der Netzwerkeinheit BS bereitgestellt.

Unmittelbar auf das Zeitfenster tf1 folgt ein Zeitfenster tf2. Die um die Zeitfenster herum gezeigten Schritte werden parallel zu den in den Zeitfenstern tf1, tf2 oder davor oder danach ausgeführt, wobei nochmals explizit darauf hingewiesen wird, dass die Darstellung lediglich schematisch ist.

In einem Schritt 230 werden Daten N22 ermittelt, welche an das Endgerät UE1 versendet werden sollen. In einem Schritt 232 werden Daten N21 ermittelt, welche an die Netzwerkeinheit BS gesendet werden sollen. In einem Schritt 231 werden die Daten N21 vor dem Versand vorverzerrt, sodass die Daten N21 möglichst unverzerrt beim Empfänger, der Netzwerkeinheit BS, ankommen.

Nach dem Ende des Zeitfensters tf1 findet ein Wechsel der Duplexkanäle CH1, CH2 für die Richtungen DL, UL der Kommunikation statt. Folglich werden während des Zeitfensters tf2 in einem Schritt 234 eine vorbekannte Sequenz S21 und die Daten N22 auf dem zweiten Duplexkanal CH2 an das Endgerät UE1 übermittelt. Zeitlich überlappend mit dem Schritt 234 werden die Daten N21 in einem Schritt 236 auf dem ersten Duplexkanal CH1 an die Netzwerkeinheit BS übermittelt. In einem Schritt 250 werden die empfangenen Daten N21 bereitgestellt.

In Abhängigkeit von der empfangenen vorbekannten Sequenz S21 ermittelt das Endgerät UE1 in einem Schritt 244 eine Schätzung des Kanals CH2. In Abhängigkeit von der ermittelten Schätzung des Kanals CH2 werden in einem Schritt 246 die empfangenen Daten N22 entzerrt und einer Anwendung des Endgeräts UE1 bereitgestellt.

In einem Schritt 248 synchronisiert sich das Endgerät UE1 auf die empfangene vorbekannte Sequenz S21. So kann beispielsweise auf Basis einer vorbekannten Position der vorbekannten Sequenz S11 innerhalb des Zeitfensters auf den Beginn des Zeitfensters tf1 und den Beginn des darauffolgenden Zeitfensters tf2 geschlossen werden.

Die a-priori vorbekannten Sequenzen S11 und S21 können als Präambel oder Pilotsequenz bezeichnet werden. Des Weiteren können die Sequenzen S11 und S21 sowie weitere verwendete Sequenzen übereinstimmen. Darüber hinaus ist es auch möglich, die Sequenzen S11 und S21 an einer anderen Position als der gezeigten anzuordnen. Die a-priori bekannten Sequenzen sind entweder fest vorgegeben oder werden beispielsweise mittels der Kontrollnachricht CNTRL an die Endgeräte verteilt.

In einem Beispiel wechseln sich Schrittfolgen 260 und 270 ab, womit die Duplexkanäle CH1 und CH2 abwechselnd für die Kommunikationsrichtungen DL und UL verwendet werden.

Selbstverständlich können die bereitgestellten Schritte auch genau andersherum eingesetzt werden. D. h., dass eine Kanalschätzung immer nur aufseiten der infrastrukturseitigen Netzwerkeinheit erfolgt und die infrastrukturseitige Netzwerkeinheit auch immer nur eine Entzerrung und Vorverzerrung durchführt. Zudem kann das bereitgestellte Verfahren auch dann eingesetzt werden, wenn die Kanalschätzung nicht anhand der Präambel, sondern anhand von in die Nutzdaten eingebetteter Pilotsignale erfolgt, wie es z. B. bei OFDM-basierten Kommunikationssystemen der Fall ist. In diesem Fall könnte sogar auf die Übertragung entsprechender Pilotsignale in einer Richtung verzichtet werden, was wiederum vorteilhaft die effektive spektrale Effizienz erhöht.

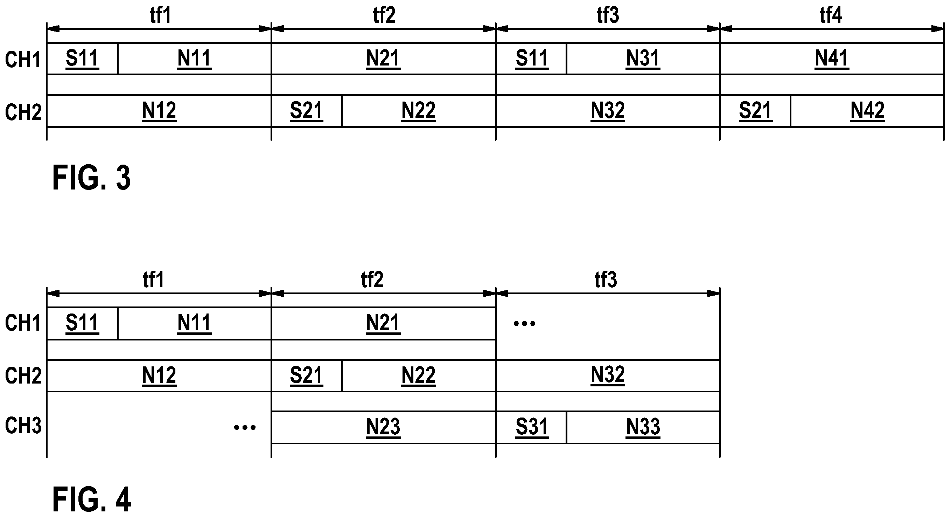

Figur 3 zeigt in schematischer Form die Nutzung der beiden Duplexkanäle CH1 und CH2. Die Daten N11, N22, N31 und N42 werden in Downlink-Richtung an das Endgerät versendet, wohingegen die Daten N12, N21, N32, N41 in Uplink-Richtung an die infrastrukturseitige Netzwerkeinheit versendet werden.

Figur 4 zeigt in schematischer Form die Nutzung von Duplexkanälen CH1, CH2 und CH3, wobei noch weitere Duplexkanäle Verwendung finden können. Beispielsweise stehen zur Übertragung mehrere schmalbandige Duplexkanäle zur Verfügung, zwischen denen nach einem festgelegten Muster gewechselt wird. Diese Sprungfolge ist sowohl dem Sender als auch dem Empfänger bekannt, beispielsweise durch vorangehende Signalisierung und Synchronisierung. Frequenzsprungverfahren haben den Vorteil, dass ein nichtautorisierter Empfänger ohne Kenntnis der Sprungfolge das Übertragungssignal nicht erfolgreich empfangen kann. Darüber hinaus bietet das Frequenzsprungverfahren im Mittel eine gute Übertragungseigenschaft bei schmalbandigen Störungen, da die Übertragung nur dann beeinträchtigt wird, wenn der aktuelle Übertragungskanal und die schmalbandige Störung kurzzeitig zusammen fallen. Dabei springt die infrastrukturseitige Netzwerkeinheit in Downlink-Richtung zwischen mehr als zwei Duplexkanälen hin und her. Dabei wir nach jedem Kanalwechsel eine a-priori bekannte Sequenz S11, S21, S32 zur Kanalschätzung gesendet. Im Uplink wechseln die Endgeräte in der gleichen Reihenfolge die Duplexkanäle - allerdings immer um einen Wechsel verzögert gegenüber dem Downlink. Wenn ein Duplexkanal in einem Zyklus für den Downlink verwendet wird, so wird er im nächsten Zyklus für den Uplink verwendet. In diesem Fall ist die Kanalschätzung, die in Downlink-Richtung aufgenommen wurde, vorteilhaft nur einen Zyklus älter, wenn sie im Uplink angewendet wird.

## Patentansprüche

1. Kommunikationsnetzwerk welches ein erstes Kommunikationsmodul (C1) und ein zweites Kommunikationsmodul (C2) umfasst,
wobei das erste Kommunikationsmodul (C1) mindestens einen Prozessor und mindestens einen Speicher umfasst, wobei der Prozessor und der Speicher so konfiguriert sind, dass das erste Kommunikationsmodul (C1) eine erste a-priori bekannte Sequenz (S11) und erste Daten (N11) auf einem ersten Duplexkanal (CH1) innerhalb eines ersten Zeitrahmens (tf1) sendet, zweite Daten (N12) auf einem zweiten Duplexkanal (CH2) innerhalb des ersten Zeitrahmens (tf1) ohne a-priori bekannte Sequenz empfängt, wobei der Empfang der zweiten Daten (N12) gleichzeitig mit dem Senden der ersten a-priori bekannten Sequenz (S11) und/oder der ersten Daten (N11) durchgeführt wird,
dritte Daten (N21) auf dem ersten Duplexkanal (CH1) innerhalb eines zweiten Zeitrahmens (tf2), welcher auf den ersten Zeitrahmen (tf1) folgt, ohne a-priori bekannte Sequenz empfängt, und
eine zweite a-priori bekannte Sequenz (S21) und vierte Daten (N22) auf dem zweiten Duplexkanal (CH2) innerhalb des zweiten Zeitrahmens (tf2) sendet, wobei der Versand der zweiten a-priori bekannten Sequenz (S21) und/oder der vierten Daten (N22) gleichzeitig mit dem Empfang der dritten Daten (N21) durchgeführt wird,
und wobei das zweite Kommunikationsmodul (C2) mindestens einen Prozessor und mindestens einen Speicher umfasst, wobei der Prozessor und der Speicher so konfiguriert sind, dass das zweite Kommunikationsmodul (C2) die erste a-priori bekannte Sequenz (S11) und erste Daten (N11) auf dem ersten Duplexkanal (CH1) innerhalb des ersten Zeitrahmens (tf1) empfängt,
zweite Daten (N12) auf dem zweiten Duplexkanal (CH2) innerhalb des ersten Zeitrahmens (tf1) ohne a-priori bekannte Sequenz sendet, wobei der Versand der zweiten Daten (N12) gleichzeitig mit dem Empfang der ersten a-priori bekannten Sequenz (S11) und/oder der ersten Daten (N11) durchgeführt wird,
dritte Daten (N21) auf dem ersten Duplexkanal (CH1) innerhalb des zweiten Zeitrahmens (tf2), welcher auf den ersten Zeitrahmen (tf1) folgt, ohne a-priori bekannte Sequenz sendet, und
die zweite a-priori bekannte Sequenz (S21) und vierte Daten (N22) auf dem zweiten Duplexkanal (CH2) innerhalb des zweiten Zeitrahmens (tf2) empfängt, wobei der Empfang der zweiten a-priori bekannten Sequenz (S21) und/oder der vierten Daten (N22) gleichzeitig mit dem Senden der dritten Daten (N21) durchgeführt wird,
wobei das zweite Kommunikationsmodul (C2) eine erste Schätzung des ersten Duplexkanals (CH1) in Abhängigkeit von der empfangenen ersten a-priori bekannten Sequenz (S11) ermittelt, eine zweite Schätzung des zweiten Duplexkanals (CH2) in Abhängigkeit von der empfangenen zweiten a-priori bekannten Sequenz (S21) ermittelt,
wobei das erste Kommunikationsmodul (C1) die empfangenen zweiten Daten (N12) ohne eine vorab durchgeführte Schätzung des zweiten Duplexkanals (CH2) bereitstellt,
die empfangenen dritten Daten (N21) ohne eine vorab durchgeführte Schätzung des ersten Duplexkanals (CH1) bereitstellt,
die ersten Daten (N11) ohne vorab durchgeführte Schätzung des ersten Duplexkanals (CH1) versendet, und
die vierten Daten (N22) ohne eine vorab durchgeführte Schätzung des zweiten Duplexkanals (CH2) versendet,
und das zweite Kommunikationsmodul (C2)
die zu sendenden zweiten Daten (N12) auf Basis einer zuvor durchgeführten Schätzung des zweiten Duplexkanals (CH2) vorverzerrt,
die zu sendenden dritten Daten (N21) auf Basis der ersten Schätzung des ersten Duplexkanals (CH1) vorverzerrt,
die empfangenen ersten Daten (N11) auf Basis der ersten Schätzung des ersten Duplexkanals (CH1) entzerrt, und
die empfangenen vierten Daten (N22) auf Basis der zweiten Schätzung des zweiten Duplexkanals (CH2) entzerrt.

2. Kommunikationsnetzwerk gemäß dem Anspruch 1, wobei der erste und der zweite Duplexkanal (CH1, CH2) physikalische Funkkanäle sind, wobei die a-priori bekannte Sequenz (S11, S21), die ersten Daten (N11) und die vierten Daten (N22) Downlink-Daten sind, und wobei die zweiten Daten (N12) und die dritten Daten (N21) Uplink-Daten sind.

3. Kommunikationsnetzwerk gemäß dem Anspruch 1, wobei der erste und der zweite Duplexkanal (CH1, CH2) physikalische Funkkanäle sind, wobei die a-priori bekannte Sequenz (S11, S21), die ersten Daten (N11) und die vierten Daten (N22) Uplink-Daten sind, und wobei die zweiten Daten (N12) und die dritten Daten (N21) Downlink-Daten sind.

4. Kommunikationsnetzwerk gemäß dem Anspruch 1, wobei eine Netzwerkeinheit (BS) das erste Kommunikationsmodul (C1) umfasst.

5. Kommunikationsnetzwerk gemäß dem Anspruch 1, wobei ein Endgerät das erste Kommunikationsmodul (C1) umfasst.

6. Kommunikationsnetzwerk gemäß dem Anspruch 1, wobei ein Endgerät (UE1, UE2) das zweite Kommunikationsmodul (C2) umfasst.

7. Kommunikationsnetzwerk gemäß dem Anspruch 1, wobei eine Netzwerkeinheit das zweite Kommunikationsmodul (C2) umfasst.

8. Ein Verfahren zum Betreiben eines Kommunikationsnetzwerks mit einem ersten Kommunikationsmodul (C1) und einem zweiten Kommunikationsmodul (C2), wobei das Verfahren umfasst:
Senden einer ersten a-priori bekannte Sequenz (S11) und erster Daten (N11) auf einem ersten Duplexkanal (CH1) innerhalb eines ersten Zeitrahmens (tf1) mittels des ersten Kommunikationsmoduls (C1), Empfangen mittels des ersten Kommunikationsmoduls (C1) zweiter Daten (N12) auf einem zweiten Duplexkanal (CH2) ohne a-priori bekannte Sequenz innerhalb des ersten Zeitrahmens (tf1), wobei der Empfang der zweiten Daten (N12) gleichzeitig mit dem Senden der ersten a-priori bekannten Sequenz (S11) und/oder der ersten Daten (N11) durchgeführt wird,
Empfangen mittels des ersten Kommunikationsmoduls (C1) dritter Daten (N21) auf dem ersten Duplexkanal (CH1) ohne a-priori bekannte Sequenz innerhalb eines zweiten Zeitrahmens (tf2), welcher auf den ersten Zeitrahmen (tf1) folgt, und
Senden einer zweiten a-priori bekannten Sequenz (S21) und vierter Daten (N22) auf dem zweiten Duplexkanal (CH2) innerhalb des zweiten Zeitrahmens (tf2) mittels des ersten Kommunikationsmoduls (C1), wobei der Versand der zweiten a-priori bekannten Sequenz (S21) und/oder der vierten Daten (N22) gleichzeitig mit dem Empfangen der dritten Daten (N21) durchgeführt wird,
Bereitstellen der empfangenen zweiten Daten (N12) mittels des ersten Kommunikationsmoduls (C1) ohne eine vorab durchgeführte Schätzung des zweiten Duplexkanals (CH2),
Bereitstellen der empfangenen dritten Daten (N21) mittels des ersten Kommunikationsmoduls (C1) ohne eine vorab durchgeführte Schätzung des ersten Duplexkanals (CH1),
Versenden der ersten Daten (N11) mittels des ersten Kommunikationsmoduls (C1) ohne vorab durchgeführte Schätzung des ersten Duplexkanals (CH1), und
Versenden der vierten Daten (N22) mittels des ersten Kommunikationsmoduls (C1) ohne eine vorab durchgeführte Schätzung des zweiten Duplexkanals (CH2).
und wobei das Verfahren weiter umfasst: Empfangen mittels des zweiten Kommunikationsmoduls (C2) der ersten a-priori bekannte Sequenz (S11) und erster Daten (N11) auf dem ersten Duplexkanal (CH1) innerhalb des ersten Zeitrahmens (tf1),
Senden mittels des zweiten Kommunikationsmoduls (C2) zweiter Daten (N12) auf dem zweiten Duplexkanal (CH2) ohne a-priori bekannte Sequenz innerhalb des ersten Zeitrahmens (tf1), wobei der Versand der zweiten Daten (N12) gleichzeitig mit dem Empfang der ersten a-priori bekannten Sequenz (S11) und/oder der ersten Daten (N11) durchgeführt wird,
Senden mittels des zweiten Kommunikationsmoduls (C2) dritter Daten (N21) auf dem ersten Duplexkanal (CH1) ohne a-priori bekannte Sequenz innerhalb des zweiten Zeitrahmens (tf2), welcher auf den ersten Zeitrahmen (tf1) folgt, und
Empfangen mittels des zweiten Kommunikationsmoduls (C2) der zweiten a-priori bekannten Sequenz (S21) und vierter Daten (N22) auf dem zweiten Duplexkanal (CH2) innerhalb des zweiten Zeitrahmens (tf2), wobei der Empfang der zweiten a-priori bekannten Sequenz (S21) und/oder der vierten Daten (N22) gleichzeitig mit dem Senden der dritten Daten (N21) durchgeführt wird,
Ermitteln mittels des zweiten Kommunikationsmoduls (C2) einer ersten Schätzung des ersten Duplexkanals (CH1) in Abhängigkeit von der empfangenen ersten a-priori bekannten Sequenz (S11),
Ermitteln mittels des zweiten Kommunikationsmoduls (C2) einer zweiten Schätzung des zweiten Duplexkanals (CH2) in Abhängigkeit von der empfangenen zweiten a-priori bekannten Sequenz (S21),
Vorverzerren mittels des zweiten Kommunikationsmoduls (C2) der zu sendenden zweiten Daten (N12) auf Basis einer zuvor durchgeführten Schätzung des zweiten Duplexkanals (CH2),
Vorverzerren mittels des zweiten Kommunikationsmoduls (C2) der zu sendenden dritten Daten (N21) auf Basis der ersten Schätzung des ersten Duplexkanals (CH2),
Entzerren mittels des zweiten Kommunikationsmoduls (C2) der empfangenen ersten Daten (N11) auf Basis der ersten Schätzung des ersten Duplexkanals (CH1), und
Entzerren mittels des zweiten Kommunikationsmoduls (C2) der empfangenen vierten Daten (N22) auf Basis der zweiten Schätzung des zweiten Duplexkanals (CH2).

## Claims

1. Communication network comprising a first communication module (C1) and a second communication module (C2), wherein the first communication module (C1) comprises at least one processor and at least one memory, the processor and the memory being configured in such a way that the first communication module (C1)
sends a first a priori known sequence (S11) and first data (N11) on a first duplex channel (CH1) within a first time frame (tf1),
receives second data (N12) on a second duplex channel (CH2) within the first time frame (tf1) without an a priori known sequence, the receiving of the second data (N12) being performed at the same time as the sending of the first a priori known sequence (S11) and/or the first data (N11),
receives third data (N21) on the first duplex channel (CH1) within a second time frame (tf2), which follows the first time frame (tf1), without an a priori known sequence, and
sends a second a priori known sequence (S21) and fourth data (N22) on the second duplex channel (CH2) within the second time frame (tf2), the sending of the second a priori known sequence (S21) and/or the fourth data (N22) being performed at the same time as the receiving of the third data (N21),
and wherein the second communication channel (C2) comprises at least one processor and at least one memory, the processor and the memory being configured in such a way that the second communication module (C2) receives the first a priori known sequence (S11) and first data (N11) on the first duplex channel (CH1) within the first time frame (tf1),
sends second data (N12) on the second duplex channel (CH2) within the first time frame (tf1) without an a priori known sequence, the sending of the second data (N12) being performed at the same time as the receiving of the first a priori known sequence (S11) and/or the first data (N11),
sends third data (N21) on the first duplex channel (CH1) within the second time frame (tf2), which follows the first time frame (tf1), without an a priori known sequence, and
receives the second a priori known sequence (S21) and fourth data (N22) on the second duplex channel (CH2) within the second time frame (tf2), the receiving of the second a priori known sequence (S21) and/or the fourth data (N22) being performed at the same time as the sending of the third data (N21),
wherein the second communication module (C2)
ascertains a first estimation of the first duplex channel (CH1) on the basis of the received first a priori known sequence (S11),
ascertains a second estimation of the second duplex channel (CH2) on the basis of the received second a priori known sequence (S21),
wherein the first communication module (C1)
provides the received second data (N12) without a previously performed estimation of the second duplex channel (CH2),
provides the received third data (N21) without a previously performed estimation of the first duplex channel (CH1),
sends the first data (N11) without a previously performed estimation of the first duplex channel (CH1), and
sends the fourth data (N22) without a previously performed estimation of the second duplex channel (CH2),
and the second communication module (C2)
predistorts the second data (N12) to be sent, on the basis of a previously performed estimation of the second duplex channel (CH2),
predistorts the third data (N21) to be sent, on the basis of the first estimation of the first duplex channel (CH1),
equalizes the received first data (N11) on the basis of the first estimation of the first duplex channel (CH1), and
equalizes the received fourth data (N22) on the basis of the second estimation of the second duplex channel (CH2).

2. Communication network according to Claim 1, wherein the first and second duplex channels (CH1, CH2) are physical radio channels, wherein the a priori known sequence (S11, S21), the first data (N11) and the fourth data (N22) are downlink data, and wherein the second data (N12) and the third data (N21) are uplink data.

3. Communication network according to Claim 1, wherein the first and second duplex channels (CH1, CH2) are physical radio channels, wherein the a priori known sequence (S11, S21), the first data (N11) and the fourth data (N22) are uplink data, and wherein the second data (N12) and the third data (N21) are downlink data.

4. Communication network according to Claim 1, wherein a network unit (BS) comprises the first communication module (C1).

5. Communication network according to Claim 1, wherein a terminal comprises the first communication module (C1).

6. Communication network according to Claim 1, wherein a terminal (UE1, UE2) comprises the second communication module (C2).

7. Communication network according to Claim 1, wherein a network unit comprises the second communication module (C2).

8. Method for operating a communication network having a first communication module (C1) and a second communication module (C2), wherein the method comprises:
sending a first a priori known sequence (S11) and first data (N11) on a first duplex channel (CH1) within a first time frame (tf1) by means of the first communication module (C1),
receiving, by means of the first communication module (C1), second data (N12) on a second duplex channel (CH2) without an a priori known sequence within the first time frame (tf1), the receiving of the second data (N12) being performed at the same time as the sending of the first a priori known sequence (S11) and/or the first data (N11),
receiving, by means of the first communication module (C1), third data (N21) on the first duplex channel (CH1) without an a priori known sequence within a second time frame (tf2), which follows the first time frame (tf1), and
sending a second a priori known sequence (S21) and fourth data (N22) on the second duplex channel (CH2) within the second time frame (tf2) by means of the first communication module (C1), the sending of the second a priori known sequence (S21) and/or the fourth data (N22) being performed at the same time as the receiving of the third data (N21),
providing the received second data (N12) by means of the first communication module (C1) without a previously performed estimation of the second duplex channel (CH2),
providing the received third data (N21) by means of the first communication module (C1) without a previously performed estimation of the first duplex channel (CH1), sending the first data (N11) by means of the first communication module (C1) without a previously performed estimation of the first duplex channel (CH1), and
sending the fourth data (N22) by means of the first communication module (C1) without a previously performed estimation of the second duplex channel (CH2),
and wherein the method further comprises:
receiving, by means of the second communication module (C2), the first a priori known sequence (S11) and first data (N11) on the first duplex channel (CH1) within the first time frame (tf1),
sending, by means of the second communication module (C2), second data (N12) on the second duplex channel (CH2) without an a priori known sequence within the first time frame (tf1), the sending of the second data (N12) being performed at the same time as the receiving of the first a priori known sequence (S11) and/or the first data (N11),
sending, by means of the second communication module (C2), third data (N21) on the first duplex channel (CH1) without an a priori known sequence within the second time frame (tf2), which follows the first time frame (tf1), and
receiving, by means of the second communication module (C2), the second a priori known sequence (S21) and fourth data (N22) on the second duplex channel (CH2) within the second time frame (tf2), the receiving of the second a priori known sequence (S21) and/or the fourth data (N22) being performed at the same time as the sending of the third data (N21),
ascertaining, by means of the second communication module (C2), a first estimation of the first duplex channel (CH1) on the basis of the received first a priori known sequence (S11),
ascertaining, by means of the second communication module (C2), a second estimation of the second duplex channel (CH2) on the basis of the received second a priori known sequence (S21),
predistorting, by means of the second communication module (C2), the second data (N12) to be sent, on the basis of a previously performed estimation of the second duplex channel (CH2),
predistorting, by means of the second communication module (C2), the third data (N21) to be sent, on the basis of the first estimation of the first duplex channel (CH2),
equalizing, by means of the second communication module (C2), the received first data (N11) on the basis of the first estimation of the first duplex channel (CH1), and equalizing, by means of the second communication module (C2), the received fourth data (N22) on the basis of the second estimation of the second duplex channel (CH2).

## Revendications

1. Réseau de communication, lequel comporte un premier module de communication (C1) et un deuxième module de communication (C2), le premier module de communication (C1) comportant au moins un processeur et au moins une mémoire, le processeur et la mémoire étant configurés de telle sorte que le premier module de communication (C1) émet une première séquence (S11) connue a priori et des premières données (N11) sur un premier canal duplex (CH1) à l'intérieur d'une première tranche de temps (tf1), reçoit des deuxièmes données (N12) sur un deuxième canal duplex (CH2) à l'intérieur de la première tranche de temps (tf1) sans séquence connue a priori, la réception des deuxièmes données (N12) étant effectuée simultanément avec l'émission de la première séquence (S11) connue a priori et/ou des premières données (N11),
reçoit des troisièmes données (N21) sur le premier canal duplex (CH1) à l'intérieur d'une deuxième tranche de temps (tf2), laquelle suit la première tranche de temps (tf1), sans séquence connue a priori, et
émet une deuxième séquence (S21) connue a priori et des quatrièmes données (N22) sur le deuxième canal duplex (CH2) à l'intérieur de la deuxième tranche de temps (tf2), l'émission de la deuxième séquence connue a priori (S21) et/ou des quatrièmes données (N22) étant effectuée simultanément avec la réception des troisièmes données (N21),
et le deuxième module de communication (C2) comportant au moins un processeur et au moins une mémoire, le processeur et la mémoire étant configurés de telle sorte que le deuxième module de communication (C2) reçoit la première séquence (S11) connue a priori et les premières données (N11) sur le premier canal duplex (CH1) à l'intérieur de la première tranche de temps (tf1),
émet les deuxièmes données (N12) sur le deuxième canal duplex (CH2) à l'intérieur de la première tranche de temps (tf1) sans séquence connue a priori, l'émission des deuxièmes données (N12) étant effectuée simultanément avec la réception de la première séquence (S11) connue a priori et/ou des premières données (N11), émet les troisièmes données (N21) sur le premier canal duplex (CH1) à l'intérieur de la deuxième tranche de temps (tf2), laquelle suit la première tranche de temps (tf1), sans séquence connue a priori, et
émet la deuxième séquence connue a priori (S21) et les quatrièmes données (N22) sur le deuxième canal duplex (CH2) à l'intérieur de la deuxième tranche de temps (tf2), la réception de la deuxième séquence connue a priori (S21) et/ou des quatrièmes données (N22) étant effectuée simultanément avec l'émission des troisièmes données (N21),
le deuxième module de communication (C2)
déterminant une première estimation du premier canal duplex (CH1) en fonction de la première séquence (S11) connue a priori reçue,
déterminant une deuxième estimation du deuxième canal duplex (CH2) en fonction de la deuxième séquence (S21) connue a priori reçue,
le premier module de communication (C1)
fournissant les deuxièmes données (N12) reçues sans une estimation préalablement effectuée du deuxième canal duplex (CH2),
fournissant les troisièmes données (N21) reçues sans une estimation préalablement effectuée du premier canal duplex (CH1),
émettant les premières données (N11) sans estimation préalablement effectuée du premier canal duplex (CH1), et
émettant les quatrièmes données (N22) sans une estimation préalablement effectuée du deuxième canal duplex (CH2),
et le deuxième module de communication (C2)
effectuant, sur la base d'une estimation effectuée précédemment du deuxième canal duplex (CH2), une prédistorsion des deuxièmes données (N12) à émettre,
effectuant, sur la base de la première estimation du premier canal duplex (CH1), une prédistorsion des troisièmes données (N21) à émettre,
corrigeant, sur la base de la première estimation du premier canal duplex (CH1), les premières données (N11) reçues, et
corrigeant, sur la base de la deuxième estimation du deuxième canal duplex (CH2), les quatrièmes données (N22) reçues.

2. Réseau de communication selon la revendication 1, le premier et le deuxième canal duplex (CH1, CH2) étant des canaux radioélectriques physiques, la séquence (S11, S21) connue a priori, les premières données (N11) et les quatrièmes données (N22) étant des données de liaison descendante, et les deuxièmes données (N12) et les troisièmes données (N21) étant des données de liaison montante.

3. Réseau de communication selon la revendication 1, le premier et le deuxième canal duplex (CH1, CH2) étant des canaux radioélectriques physiques, la séquence (S11, S21) connue a priori, les premières données (N11) et les quatrièmes données (N22) étant des données de liaison montante, et les deuxièmes données (N12) et les troisièmes données (N21) étant des données de liaison descendante.

4. Réseau de communication selon la revendication 1, une unité de réseau (BS) comportant le premier module de communication (C1).

5. Réseau de communication selon la revendication 1, un terminal comportant le premier module de communication (C1).

6. Réseau de communication selon la revendication 1, un terminal (U1, UE2) comportant le deuxième module de communication (C2).

7. Réseau de communication selon la revendication 1, une unité de réseau comportant le deuxième module de communication (C2).

8. Procédé pour faire fonctionner un réseau de communication comportant un premier module de communication (C1) et un deuxième module de communication (C2), le procédé comprenant :
émission d'une première séquence (S11) connue a priori et de premières données (N11) sur un premier canal duplex (CH1) à l'intérieur d'une première tranche de temps (tf1) au moyen du premier module de communication (C1),
réception, au moyen du premier module de communication (C1), de deuxièmes données (N12) sur un deuxième canal duplex (CH2) sans séquence connue a priori à l'intérieur de la première tranche de temps (tf1), la réception des deuxièmes données (N12) étant effectuée simultanément avec l'émission de la première séquence (S11) connue a priori et/ou des premières données (N11), réception, au moyen du premier module de communication (C1), de troisièmes données (N21) sur le premier canal duplex (CH1) sans séquence connue a priori à l'intérieur d'une deuxième tranche de temps (tf2), laquelle suit la première tranche de temps (tf1), et
émission d'une deuxième séquence connue a priori (S21) et de quatrièmes données (N22) sur le deuxième canal duplex (CH2) à l'intérieur de la deuxième tranche de temps (tf2) au moyen du premier module de communication (C1), l'émission de la deuxième séquence (S21) connue a priori et/ou des quatrièmes données (N22) étant effectuée simultanément avec la réception des troisièmes données (N21),
fourniture des deuxièmes données (N12) reçues au moyen du premier module de communication (C1) sans une estimation préalablement effectuée du deuxième canal duplex (CH2),
fourniture des troisièmes données (N21) reçues au moyen du premier module de communication (C1) sans une estimation préalablement effectuée du premier canal duplex (CH1),
émission des premières données (N11) au moyen du premier module de communication (C1) sans estimation préalablement effectuée du premier canal duplex (CH1), et
émission des quatrièmes données (N22) au moyen du premier module de communication (C1) sans une estimation préalablement effectuée du deuxième canal duplex (CH2),
et le procédé comprenant en outre :
réception, au moyen du deuxième module de communication (C2), de la première séquence (S11) connue a priori et des premières données (N11) sur le premier canal duplex (CH1) à l'intérieur de la première tranche de temps (tf1),
émission, au moyen du deuxième module de communication (C2), des deuxièmes données (N12) sur le deuxième canal duplex (CH2) sans séquence connue a priori à l'intérieur de la première tranche de temps (tf1), l'émission des deuxièmes données (N12) étant effectuée simultanément avec la réception de la première séquence (S11) connue a priori et/ou des premières données (N11), émission, au moyen du deuxième module de communication (C2), des troisièmes données (N21) sur le premier canal duplex (CH1) sans séquence connue a priori à l'intérieur de la deuxième tranche de temps (tf2), laquelle suit la première tranche de temps (tf1), et
émission, au moyen du deuxième module de communication (C2), de la deuxième séquence connue a priori (S21) et des quatrièmes données (N22) sur le deuxième canal duplex (CH2) à l'intérieur de la deuxième tranche de temps (tf2), la réception de la deuxième séquence connue a priori (S21) et/ou des quatrièmes données (N22) étant effectuée simultanément avec l'émission des troisièmes données (N21),
détermination, au moyen du deuxième module de communication (C2), d'une première estimation du premier canal duplex (CH1) en fonction de la première séquence (S11) connue a priori reçue,
détermination, au moyen du deuxième module de communication (C2), d'une deuxième estimation du deuxième canal duplex (CH2) en fonction de la deuxième séquence (S21) connue a priori reçue,
prédistorsion des deuxièmes données (N12) à émettre, au moyen du deuxième module de communication (C2) et sur la base d'une estimation effectuée précédemment du deuxième canal duplex (CH2),
prédistorsion des troisièmes données (N21) à émettre, au moyen du deuxième module de communication (C2) et sur la base de la première estimation du premier canal duplex (CH2),
correction des premières données (N11) reçues, au moyen du deuxième module de communication (C2) et sur la base de la première estimation du premier canal duplex (CH1), et
correction des quatrièmes données (N22) reçues, au moyen du deuxième module de communication (C2) et sur la base de la deuxième estimation du deuxième canal duplex (CH2).
